# EUROPÄISCHE PATENTANMELDUNG

(11) **EP 1 777 797 A2**
(43) Veröffentlichungstag der Anmeldung: **25.04.2007**
(21) Anmeldenummer: 06020784.2
(22) Anmeldetag: 04.10.2006
(51) Int. Cl.: H02K 3/50

(54) **Wickelkopfscheibe mit Motorverschaltung**

(30) Priorität: 19.10.2005 DE 102005050407
(71) Anmelder: WILO AG, 44263 Dortmund (DE)
(72) Erfinder: Hoheisel, Stephan, 44287 Dortmund (DE); Dreihaus, Uwe, 59067 Hamm (DE); Materne, Thomas, 59348 Lüdinghausen (DE)
(74) Vertreter: COHAUSZ DAWIDOWICZ HANNIG & SOZIEN

(57) **Zusammenfassung**

Die Erfindung betrifft eine Wickelkopfkappe mit einem die Statorwicklungen tragenden Rohrteil und einer daran angeformten koaxialen Flanschfläche, die die Statorwicklungen abdeckt, wobei die Wickelkopfkappe Kontaktelemente in Form von Kontaktflächen aufweist, die über Leiterbahnen miteinander verbunden sind, so dass die Wickelkopfkappe einen dreidimensionaler Träger einer Schaltung darstellt, wobei die Kontaktflächen und die Leiterbahnen mittels eines MID-Verfahrens in bzw. auf die Wickelkopfkappe eingebracht bzw. aufgebracht sind.

## Beschreibung

Die vorliegende Erfindung betrifft eine Wickelkopfkappe zur Abdeckung von Wicklungen, insbesondere der Statorwicklungen eines Elektromotors mit elektrisch leitenden Kontaktelementen zur Kontaktierung der Wicklungsenden der Motorwicklungen und/oder der Motorzuleitungen und/oder von Anschlüssen eines Steuerungs- oder Leitungsmoduls.

Für die Herstellung eines Elektromotors ist es bekannt, das Statorwicklungen auf eine Wickelkopfkappe zu wickeln, wobei diese Kappe das Statorpaket stirnseitig abdeckt. Eine derartige Wickelkopfkappe ist aus der deutschen Offenlegungsschrift DE 41 24 327 bekannt. Sie offenbart eine Wickelkopfkappe für die Wickelköpfe des Stators eines Elektromotors, wobei die Kappe eine die Wickelkopfstirnseite abdeckende, ringförmige Flanschfläche aufweist, welche Öffnungen besitzt, durch die Spulendrahtenden geführt sind. An der Flanschfläche ist hierbei ein koaxiales Rohrteil angeformt, das im montierten Zustand die Innenfläche des Wickelkopfes auskleidet. Dieses Rohrteil trägt somit im montierten Zustand die Statorwicklungen.

Des weiteren weist die Wickelkopfkappe einen angespritzten Kammerblock auf, der eine der Anzahl der Statorwicklungsenden entsprechende Anzahl von Kammern aufweist, in welche die einzelnen Wicklungsenden durch die Öffnungen der Flanschfläche eingeführt sind und mittels spezieller Schlitze und einem Amboss in Position gehalten werden. In jeder Kammer liegt hierbei ein Klemm-Schneid-Kontakt ein, mit welchem die Wicklungsenden durch einen Einschießvorgang kontaktiert werden. Über die Klemm-Schneid-Kontakte erfolgt bei montiertem Stator die Weiterführung der Wicklungsenden zum Anschlussmodul, insbesondere zum Klemmenkasten, in welchem die eigentliche Motorverschaltung, insbesondere die Phasen- und Gruppenzugehörigkeit der Statorwicklungen je nach Elektromotortyp realisiert ist.

Für einen problemlosen Fertigungsprozess ist es besonders wichtig, dass der Kammerblock der Wickelkopfkappe sehr genau dimensioniert ist. Eine präzise Ausrichtung der Wicklungsenden in den einzelnen Kammern ist hier außerdem notwendig. Nachteilig ist ferner, dass die Klemm-Schneid-Kontakte innerhalb der einzelnen Kammern an den entsprechenden Drahtdurchmesser der Wicklungsenden angepasst werden müssen. Ein weiterer Nachteil einer derartigen Wickelkopfkappe ist darin zu sehen, dass die Verschaltung der Statorwicklungen im Klemmenkasten zu erfolgen hat, wobei die Motorverschaltung üblicherweise durch ein Stanzgitter oder durch Leiterbahnen auf einer Elektronikplatine realisiert ist. Dies erfordert einen relativ großen Klemmenkasten, so dass sich bei der Verwendung einer Wickelkopfkappe nach dem Stand der Technik auch baulich bedingte Nachteile ergeben.

Aufgabe der vorliegenden Erfindung ist es, eine gattungsgemäße Wickelkopfkappe nach dem Stand der Technik derart zu verbessern, dass eine einfache und sichere Kontaktierung der Wicklungsenden bei einem minimalen Herstellungs- und Montageaufwand und entsprechend geringen Herstellungskosten gewährleistet ist Und dass durch den Verzicht auf ein Stanzgitter oder eine Platine zur Verschaltung der Motorwicklungen der Klemmenkasten oder das Anschlussmodul des Elektromotors auf eine minimale Größe reduzierbar ist oder je nach Motortyp gänzlich weggelassen werden kann. Es ist ebenfalls eine Aufgabe der Erfindung, die Anzahl der Einzelteile für die Montage des Elektromotors zu reduzieren, so dass der Herstellungsaufwand erheblich vereinfacht und verkürzt werden kann.

Diese Aufgabe wird durch den kennzeichnenden Teil des Anspruchs 1 sowie durch die Unteransprüche 2 und 8 gelöst.

Ein wesentlicher Vorteil der Erfindung liegt darin, dass bei dem Herstellungsprozess des Elektromotors mit der erfindungsgemäßen Wickelkopfkappe ein hoher Grad an Prozessautomatisierung etabliert werden kann. Hierbei kann die Wickelkopfkappe Kontaktelemente aufweisen, welche im Wesentlichen Kontaktflächen sind, die vorzugsweise stoffschlüssig in oder auf die Oberfläche der Wickelkopfkappe ein- oder aufgebracht sind, wobei sich die Kontaktflächen parallel zur Oberfläche erstrecken, insbesondere in der Ebene der Oberfläche liegen. Ferner kann die Wickelkopfkappe zumindest eine Leiterbahn aufweisen, über die zumindest eine Kontaktfläche mit zumindest einer anderen Kontaktfläche verbunden sein kann, wobei auch diese Leiterbahn stoffschlüssig in oder auf die Oberfläche der Wickelkopfkappe ein- oder aufgebracht sein kann und sich parallel zur Oberfläche erstrecken, insbesondere in der Ebene der Oberfläche liegen kann. Hierdurch ist eine Integration sowohl der Motorverschalturig als auch der Motoranschlüsse direkt auf der Wickelkopfkappe möglich.

Zur Verschaltung der Statorwicklungen, beispielsweise zu Parallel- oder Reihenanordnungen und/ oder Im Falle von Drehstrommotoren zu einer Stern- oder Dreieckverschaltung können auch mehrere Leiterbahnen eine oder mehrere Kontaktfläche(n) mit einer oder mehreren anderen Kontaktfläche(n) verbinden. Auf diese Weise kann die Motorverschaltung gänzlich auf der Wickelkopfkappe erfolgten, so dass eine Motorverschaltung beispielsweise durch ein Stanzgitter oder durch entsprechende Leiterbahnen auf einer Platine innerhalb des Klemmenkastens entfallen kann bzw. können, so dass die baulichen Abmessungen des Klemmenkastens oder eines Steuerungs- oder Leitungsmoduls erheblich reduziert werden können.

Weiterhin ist es von Vorteil, wenn in der Wickelkopfkappe ein Steckanschluss integriert, insbesondere eingegossen oder umspritzt ist, an welchen beispielsweise unmittelbar die Motorzuleitungen angeschlossen werden können oder eine steckbare Verbindung zum Klemmenkasten oder zum Steuerungs- oder Leitungsmodul hergestellt werden kann. Durch diesen Steckanschluss kann die Montage zusätzlich vereinfacht werden.

In einer vorteilhaften Ausführungsvariante des Steckanschlusses weist dieser Kontaktzungen oder Kontaktstifte auf, die von der Wickelkopfkappe abstehen und in entsprechende Steckbuchsen eines Gegensteckers zur Motorbestromung oder in die Anschlüsse des Steuerungs- oder Leitungsmoduls einsteckbar sind. Hierdurch ist eine besonders sichere elektrische Verbindung der Stator- und Wickelkopfeinheit mit der Steuerungseinheit gewährleistet.

Vorzugsweise können die Kontaktzungen oder die Kontaktstifte des Steckanschlusses im Bereich der Oberfläche der Wickelkopfkappe mit zumindest einer Leiterbahn jeweils elektrisch kontaktiert und auf diese Weise mit zumindest einer Kontaktfläche verbunden sein.

Weiterhin ist es von Vorteil, wenn auf die Oberfläche der Wickelkopfkappe ein oder mehrere elektrische oder elektronische Bauelemente aufgebracht sind. Diese Bauelemente können beispielsweise zur Steuerung des Elektromotors dienen, aber auch von Sensoren, beispielsweise Hall-Sensoren und/oder Temperaturfühler gebildet sein. Hierdurch wird eine besonders hohe Integrationsdichte funktionaler Bauteile erreicht. Die Anordnung elektrischer und/oder elektronischer Bauelemente auf der Wickelkopfkappe anstelle ihrer Platzierung auf einer Platine innerhalb des Klemmenkastens oder des Steuerungs- oder Leitungsmoduls ermöglicht hierbei eine erhebliche Reduzierung des Klemmenkastenvolumens oder des Steuerungsmodulvolumens oder sogar einen gänzlichen Verzicht auf einen separaten Klemmenkasten oder auf ein Steuerungs- oder Leitungsmodul.

Die erfindungsgemäße Wickelkopfkappe kann zur Verschaltung der elektrischen bzw. elektronischen Bauelemente zumindest eine stoffschlüssig in oder auf die Oberfläche der Wickelkopfkappe ein- oder aufgebrachte Leiterbahn aufweisen, die mindestens einen Anschlusskontakt eines Bauelementes elektrisch mit mindestens einer Kontaktfläche verbindet. Ferner kann die Wickelkopfkappe eine weitere Leiterbahn aufweisen, die zwei Bauelemente elektrisch miteinander verbindet.

Durch diese Maßnahme kann die Wickelkopfkappe nicht nur Träger einer für hohe Ströme ausgelegten Motor- bzw. Wicklungsverschaltung sein, sondern ebenfalls Träger einer Schaltungsstruktur sein, die die den Elektromotor steuernden Bauelemente und/oder zur Statuserfassung des Elektromotors erforderlichen Bauelemente elektrisch miteinander verbindet. Hierdurch wird die Integrationsdichte von funktionalen Bauelementen auf der Wickelkopfkappe zusätzlich erhöht, wobei sich der Montageaufwand sowie die Montagezeit insbesondere hinsichtlich eines vollständig automatisierten Prozesses erheblich reduziert. Insbesondere in Anbetracht hoher Fertigungsstückzahlen ergibt sich damit eine enorme Einsparung von Herstellungskosten.

Vorzugsweise sind die Kontaktflächen und/oder die Leiterbahnen auf der dem Stator abgewandten Seite der Wickelkopfkappe bzw. der Flanschfläche in oder auf die Oberfläche ein- oder aufgebracht. Weiterhin können auch die Bauelemente auf der dem Stator abgewandten Seite der Wickelkopfkappe auf die Oberfläche aufgebracht sein.

Alternativ können Kontaktflächen und/oder Leiterbahnen auch auf der dem Stator zugewandten Oberfläche der Flanschfläche der Wickelkopfkappe aufgebracht sein, wodurch eine höhere Flexibilität bei der Motorverschaltung erzielt werden kann. Elektrische Kontaktdurchführungen von einer Oberflächenseite der Flanschfläche auf die andere können hierbei Leiterbahnen auf der dem Stator abgewandten Seite mit Leiterbahnen auf der dem Stator zugewandten Oberfläche der Flanschfläche verbinden. Dies ist insbesondere dann vorteilhaft, wenn die dem Stator abgewandte Oberfläche der Flanschfläche durch aufgebrachte elektrische und/oder elektronische Bauelemente eingeschränkt ist und weiterer Platz für die Leiterbahnen der Motorverschaltung oder Platz für die Leiterbahnen der Bauelementverschaltung benötigt wird.

Die Kontaktflächen und/oder die Leiterbahnen können in einer vorteilhaften Ausführungsvariante der erfindungsgemäßen Wickelkopfkappe mit Hilfe eines MID-Verfahrens (Molded Interconnect Device) vorzugsweise mittels eines Laser-Strukturierverfahrens in oder auf die Oberfläche der Wickelkopfkappe ein- oder aufgebracht sein. Die Integration der Kontaktflächen und/oder der Leiterbahnen mit Hilfe eines MID-Verfahrens birgt den Vorteil, dass der Herstellungsprozess der Wickelkopfkappe fast vollständig automatisiert ablaufen kann, wobei bei besonders hohen Stückzahlen eine enorme Kosteneinsparung möglich ist.

Zur Herstellung einer elektrisch leitenden Verbindung mit jeweils einer Kontaktfläche können die Wicklungsenden der Motorwicklungen und/oder die Leitungsenden der Motorzuleitungen und/oder der Anschlüsse des Steuerungs- oder Leitungsmoduls verklebt, verlötet, verbonded oder verschweißt werden. Dies gewährleistet eine besonders vibrationssichere Verbindung mit minimalem Kontaktwiderstand und daher auch bei sehr hohen Motorströmen eine geringe Verlustleistung.

Vorteilhafterweise kann die erfindungsgemäße Wickelkopfkappe aus spritz-gegossenem Kunststoff hergestellt sein, so dass die Einbringung von Leiterbahnen und Kontaktflächen in die Oberfläche der Wickelkopfkappe durch ein MID-Verfahren auf einfache Weise möglich ist.

Die Wickelkopfkappe kann vorzugsweise eingebrachte Schlitze aufweisen, die sich zum Außenrand der Flanschfläche der Motorwickelkappe öffnen, und durch welche die Wicklungsanschlüsse der Statorwicklungen zur Positionierung durchgeführt sind. Bei dem Montagevorgang können die Wicklungsenden der Statorwicklungen auf einfache Weise in die Schlitze eingelegt werden, so dass die Wicklungsenden auf die dem Stator abgewandten Seite der Wickelkopfkappe vorragen und mit entsprechenden Kontaktflächen verbunden werden können.

Weitere Merkmale der Wickelkopfkappe sind den Figuren 1 - 3 zu entnehmen.

Es zeigen:
- Fig. 1:: Vorderansicht der Flanschfläche der Wickelkopfkappe mit Kontaktflächen und Leiterbahnen;
- Fig. 2:: Vorderansicht der Flanschfläche der Wickelkopfkappe mit zusätzlichem Steckanschluss;
- Fig. 3:: Vorderansicht der Flanschfläche der Wickelkopfkappe mit zusätzlichen Bauelementen.

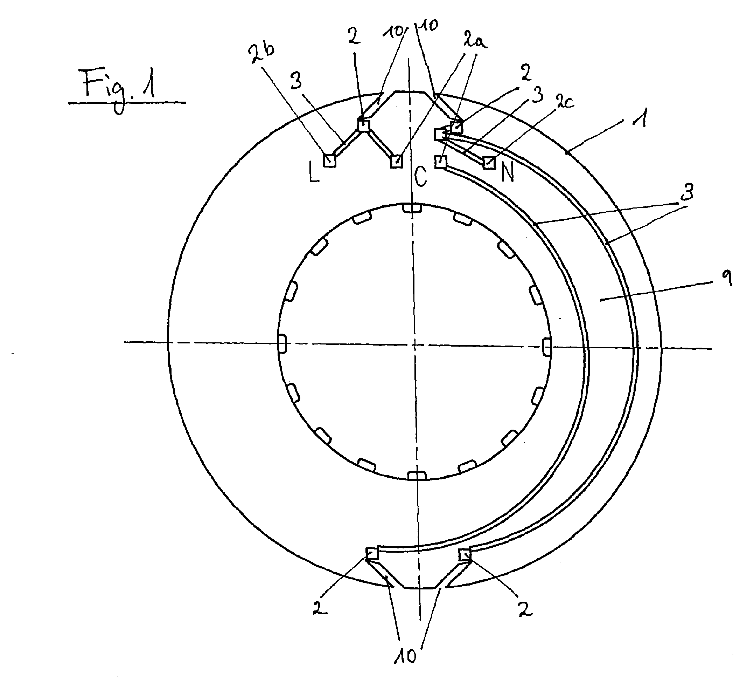

Fig. 1 zeigt die dem Stator abgewandte Seite der Flanschfläche der erfindungsgemäßen Wickelkopfkappe 1 mit Kontaktelementen 2, 2a, 2b, 2c, und Leiterbahnen 3. Die Leiterbahnen 3 und die Kontaktflächen 2, 2a, 2b, 2c, sind auf der Oberfläche 9 der Flanschfläche der Wickelkopfkappe 1 mit Hilfe eines MID-Verfahrens eingebracht. Die Wickelkopfkappe weist Schlitze 10 auf, durch welche die Wicklungsdrahtenden der Statorwicklungen, die hinter der Flanschfläche liegen, zu der dem Stator abgewandten Seite der Flanschfläche geführt werden können. Fig. 1 zeigt hier beispielhaft eine Wickelkopfkappe für einen einphasigen und zweipoligen Stator mit 2 Wicklungen, die zusammen vier Wicklungsenden haben, welche durch die Schlitze 10 auf die Vorderseite der Wickelkopfkappe geführt sind und mit den Kontaktflächen 2 verbunden werden können. Weiterhin sind Kontaktflächen 2b und 2c zur Kontaktierung mit einer einphasigen Motorzuleitung vorgesehen. Hierbei wird die Kontaktfläche 2b mit der Phase L der Motorzuleitung verbunden und die Kontaktfläche 2c mit dem Nullleiter N der Motorzuleitung. Ein Betriebskondensator C wird für den Betrieb mit den Kontaktflächen 2a verbunden. Die Kontaktflächen 2, 2a, 2b, 2c, sind hierbei über Leiterbahnen 3 miteinander elektrisch verbunden.

Es sei darauf hingewiesen, dass die in Fig. 1 dargestellte Ausführungsvariante einer Motorverschaltung für einen zweipoligen Motor und auch auf andere, nicht gezeigte Motorverschaltungsarten, beispielsweise Parallel- und/oder Reihenschaltungen einzelner Statorwicklungen, sowie für höher polige Elektromotoren angewendet werden kann. Auch kann eine entsprechend angepasste Motorverschaltung bei Elektromotoren mit einem dreiphasigen Stator angewendet werden.

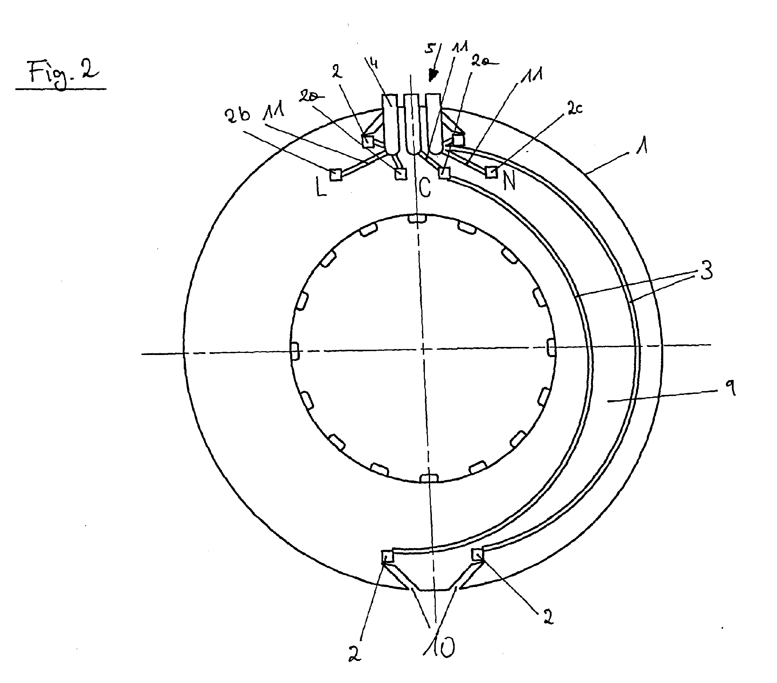

Fig. 2 zeigt die Vorderseite der Flanschfläche der Wickelkopfkappe mit einem Steckanschluss 5, welcher in dieser Ausführungsvariante Kontaktzungen 4 aufweist, die senkrecht von der Flanschfläche abstehen und in diese eingegossen oder umspritzt sind. Alternativ kann der Steckanschluss auch Kontaktstifte aufweisen, welche in die Flanschfläche der Wickelkopfkappe eingegossen oder umspritzt sind. Leiterbahnen 11 verbinden die Kontaktzungen 4 des Steckanschlusses 5 mit Kontaktflächen 2, 2a, 2b, 2c.

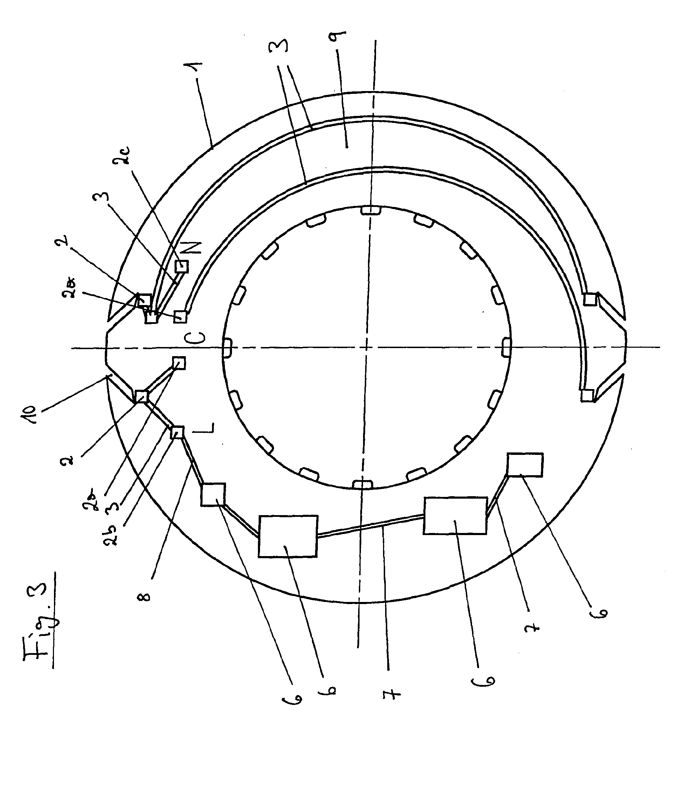

Fig. 3 zeigt eine weitere Ausführungsvariante der erfindungsgemäßen Wickelkopfkappe mit nunmehr auf der Oberfläche 9 aufgebrachten elektrischen und/oder elektronischen Bauelementen 6. Die Bauelemente 6 können beispielsweise zur Steuerung des Elektromotors dienen. Einzelne Bauelemente 6 können aber auch als Sensoren, beispielsweise als Hallsensor oder als Temperaturfühler ausgebildet sein, durch welche der Zustand des Elektromotors erfasst wird.

Über Leiterbahnen 7 sind die Bauelemente untereinander elektrisch verbunden. Eine weitere Leiterbahn 8 verbindet hier den Anschluss eines elektrischen Bauelementes mit der Kontaktfläche 2b, an welche die Phase L der Motorzuleitung angeschlossen ist. Die Wickelkopfkappe nach Fig. 3 ist somit ein dreidimensionaler Schaltungsträger, der sowohl die Motorwicklungsverschaltung als auch den Elektromotor steuernde elektronische Bauelemente sowie deren Verschaltungen trägt. Bauelemente, Leiterbahnen und Kontaktflächen bilden eine kompakte und hochintegrierte Einheit, die ein Montageelement darstellt und daher den Montagevorgang bei der Herstellung des Elektromotors stark vereinfacht.

Im Folgenden wird beschrieben, wie die Kontaktflächen 2, 2a, 2b, 2c, die Leiterbahnen 3, 7, 8, 11, und die elektronischen Bauelemente auf die Wickelkopfkappe aufgebracht bzw. in die Oberfläche 9 der Wickelkopfkappe integriert werden können.

Strukturierverfahren für MID's sind bekannt. Hierbei kann die Strukturierung beispielsweise während des Spritzgussverfahrens selbst erfolgen oder eine nachträgliche Strukturierung der spritz-gegossenen Wickelkopfkappe durchgeführt werden. Als Strukturierungsverfahren während des Spritzgussvorgangs eignet sich beispielsweise das so genannte Zwei-Schuss-Verfahren. Die eigentliche Strukturierung erfolgt hierbei durch den Spritzgussprozess selbst.

Dazu wird ein metallisierbarer Kunststoff mit einem nicht metallisierbaren Material umspritzt und anschließend außenstromlos metallisiert. Durch die partielle Metallisierung wird die spätere Leiterstruktur sichergestellt, wobei die Metallisierbarkeit des Kunststoffes durch vorkatalysiertes Material erreicht wird. Das Zwei-Schuss-Verfahren ist somit ein Zwei-Komponenten-Spritzguss-Verfahren, bei welchem ein Formteil zunächst spritz-gegossen wird, anschließend in einem Bad eine chemische Oberflächenaktivierung erfährt und schließlich selektiv metallisiert wird. Das Zwei-Komponenten-Spritzguss-Verfahren ist besonders bei hohen Stückzahlen äußerst wirtschaftlich.

Alternativ kann als MID-Verfahren auch ein Ein-Komponenten-Spritzguss-Verfahren, vorzugsweise ein Laser-Strukturier-Verfahren angewendet werden. Die LaserStrukturierung bietet gegenüber konventionellen MID-Verfahren den Vorteil, dass sowohl breite als auch extrem feine Leiterbahnstrukturen realisiert werden können. Außerdem bietet dieses Verfahren eine hohe Flexibilität hinsichtlich des Leiterbildes, da sich Modifizierungen leicht durch Änderungen der Strukturierungsdaten realisieren lassen. Eine nachträgliche Anpassung des Leiterbahnentwurfs ist also nicht mit einer Werkzeugänderung des Spritzgießwerkzeuges verbunden.

Mit Hilfe eines Laser-Strukturierungsverfahrens lässt sich auf besonders einfache Weise ein automatisierter Herstellungsprozess für Schaltungslayouts auf dreidimensionalen Trägerstrukturen, insbesondere auf der erfindungsgemäßen Wickelkopfkappe 1 realisieren, so dass die Wickelkopfkappe 1 sowie die Motorverschaltung und die Bauelementverschaltung zu einer einzigen Einheit funktionell zusammengefasst werden können. Die Grundlage des Verfahrens bilden dotierte Thermoplaste, auf denen die zu realisierenden Leiterbahnen mittels Laser gezielt aktiviert und anschließend im chemischen Bad metallisiert werden können.

Für die Herstellung der erfindungsgemäßen Wickelkopfkappe 1 kann zum Spritzgussverfahren ein thermoplastische Kunststoff verwendet werden, in dem eine metallorganische Komplexverbindung gelöst oder fein dispergiert vorliegt. Diese spezielle chemische Verbindung lässt sich durch aufgebracht Laserstrahlung derart modifizieren, dass sie eine selektive Metallabscheidung in den bestrahlten Bereichen für den folgenden Metallisierungsprozessschritt katalysiert.

Bei der Herstellung der Wickelkopfkappe 1 erfolgt bei Anwendung des Laser-Strukturierverfahrens somit zunächst die Herstellung der Wickelkopfkappe durch Spritzgießen, anschließend die Laserstrukturierung selbst, in dem die Oberfläche 9 der Wickelkopfkappe 1 durch einen Laserstrahl an denjenigen Stellen belichtet wird, an denen die Kontaktflächen 2, 2a, 2b, 2c, sowie die Leiterbahnen 3, 7, 8, 11, entstehen sollen. An den belichteten Stellen werden Metallkeime freigesetzt, an welchen sich in einem anschließenden Bad, in das die Wickelkopfkappe gelegt wird, beispielsweise Kupfer abscheidet, was schließlich die Leiterbahnen 3, 7, 8, 11, und die Kontaktflächen 2, 2a, 2b, 2c, bildet.

Für den Erhalt der erforderlichen Oberflächenstruktur wird bei der Laserstrukturierung an der Grenzfläche Kunststoff-Metall eine sehr hohe Haftung von Metall und Kunststoff erzielt. Die mit diesem MID-Verfahren hergestellte Wickelkopfkappe als Schaltungsträger ist äußerst robust und langlebig und ermöglicht durch die funktionelle Integration von Schaltung und Formteil die Reduzierung der baulichen Größe des Klemmenkastens oder des Steuerungs- oder Leitungsmoduls. Insbesondere bei hohen Stückzahlen ist die Herstellung einer Wickelkopfkappe mit MID-Technik besonders wirtschaftlich.

## Patentansprüche

1. Wickelkopfkappe (1) zur Abdeckung von Wicklungen insbesondere der Statorwicklungen eines Elektromotors mit elektrisch leitenden Kontaktelementen (2, 2a, 2b, 2c) zur Kontaktierung der Wicklungsenden der Motorwicklungen und/ oder der Motorzuleitungen und/ oder von Anschlüssen eines Steuerungs- oder Leitungsmoduls, **dadurch gekennzeichnet, dass** die Kontaktelemente (2, 2a, 2b, 2c) im Wesentlichen Kontaktflächen sind, die stoffschlüssig in oder auf die Oberfläche (9) der Wickelkopfkappe (1) ein- oder aufgebracht sind, wobei sich die Kontaktflächen parallel zur Oberfläche (9) erstrecken insbesondere in der Ebene der Oberfläche (9) liegen, und dass die Wickelkopfkappe (1) aus spritz-gegossenem Kunststoff hergestellt ist.

2. Wickelkopfkappe (1) nach Anspruch 1, **dadurch gekennzeichnet, dass** zumindest eine der Kontaktflächen (2, 2a, 2b, 2c) über mindestens eine Leiterbahn (3) mit zumindest einer anderen Kontaktfläche verbunden ist.

3. Wickelkopfkappe (1) nach Anspruch 1 oder 2, **gekennzeichnet durch** mindestens einen Steckanschluss (5), der in die Wickelkopfkappe (1) integriert insbesondere eingegossen oder umspritzt ist.

4. Wickelkopfkappe (1) nach Anspruch 3, **dadurch gekennzeichnet, dass** der Steckanschluss (5) Kontaktzungen (4) oder Kontaktstifte aufweist, die von der Wickelkopfkappe (1) abstehen und in entsprechende Steckbuchsen eines Gegensteckers zur Motorbestromung oder in die Anschlüsse des Steuerungs- oder Leitungsmoduls einsteckbar sind.

5. Wickelkopfkappe (1) nach Anspruch 4, **dadurch gekennzeichnet, dass** zumindest eine Leiterbahn (11) eine Kontaktzunge (4) oder einen Kontaktstift im Bereich der Oberfläche (9) der Wickelkopfkappe (1) elektrisch kontaktiert und mit zumindest einer Kontaktfläche (2, 2a, 2b, 2c) verbindet.

6. Wickelkopfkappe (1) nach einem der vorherigen Ansprüche,
**dadurch gekennzeichnet, dass**
ein oder mehrere elektrische(s) oder elektronische(s) Bauelement(e) (6) auf die Oberfläche (9) der Wickelkopfkappe (1) aufgebracht ist bzw. sind.

7. Wickelkopfkappe (1) nach Anspruch 6, **dadurch gekennzeichnet, dass** zumindest eine Leiterbahn (8) mindestens einen Anschlusskontakt eines Bauelementes (6) elektrisch mit mindestens einer Kontaktfläche (2, 2a, 2b, 2c) verbindet und/ oder dass bei mindestens zwei Bauelementen (6) zumindest eine Leiterbahn (7) die zumindest zwei Bauelemente (6) elektrisch miteinander verbindet.

8. Wickelkopfkappe (1) nach einem der vorherigen Ansprüche,
**dadurch gekennzeichnet, dass**
die Leiterbahnen (3, 7, 8, 11) stoffschlüssig in oder auf die Oberfläche (9) der Wickelkopfkappe (1) ein- oder aufgebracht sind, wobei sich die Leiterbahnen (3, 7, 8, 11) parallel zur Oberfläche (9) erstrecken insbesondere in der Ebene der Oberfläche (9) liegen.

9. Wickelkopfkappe (1) nach einem der vorherigen Ansprüche,
**dadurch gekennzeichnet, dass**
die Kontaktflächen (2, 2a, 2b, 2c) und/ oder die Leiterbahnen (3, 7, 8, 11) auf der dem Stator abgewandten Seite der Wickelkopfkappe (1) in oder auf die Oberfläche (9) ein- oder aufgebracht sind und/ oder dass das mindestens eine Bauelement (6) auf der dem Stator abgewandten Seite der Wickelkopfkappe (1) auf die Oberfläche (9) aufgebracht ist.

10. Wickelkopfkappe (1) nach einem der vorherigen Ansprüche,
**dadurch gekennzeichnet, dass**
die Kontaktflächen (2, 2a, 2b, 2c) und/ oder die Leiterbahnen (3, 7, 8) mittels eines MID-Verfahrens vorzugsweise mittels eines Laser-Strukturierverfahrens in oder auf die Oberfläche (9) der Wickelkopfkappe (1) ein- oder aufgebracht sind.

11. Wickelkopfkappe (1) nach einem der vorherigen Ansprüche,
**dadurch gekennzeichnet, dass**
die Wicklungsenden der Motorwicklungen und/ oder die Leitungsenden der Motorzuleitungen und/ oder der Anschlüsse des Steuerungs- oder Leitungsmoduls zur Herstellung einer elektrisch leitenden Verbindung mit jeweils einer Kontaktfläche (2, 2a, 2b, 2c) verklebt oder verlötet oder verbondet oder verschweißt sind.

12. Wickelkopfkappe (1) nach einem der vorherigen Ansprüche,
**dadurch gekennzeichnet, dass**
sie Schlitze (10) aufweist, durch welche die Wicklungsanschlüsse der Statorwicklungen zur Positionierung durchgeführt sind.
